# EUROPEAN PATENT APPLICATION

(11) **EP 1 903 758 A2**
(43) Date of publication of application: **26.03.2008**
(21) Application number: 07015648.4
(22) Date of filing: 08.08.2007
(51) Int. Cl.: H04M 1/725

(54) **Mobile communication terminal and method for providing wait screen thereof**

(30) Priority: 25.09.2006 KR 20060092753
(71) Applicant: Samsung Electronics Co., Ltd, Suwon-si, Gyeonggi-do (KR)
(72) Inventor: Jong, In Won, Suwon-si Gyeonggi-do (KR); Kim, Jin Yong, Suwon-si Gyeonggi-do (KR); Baek, Sung Hwan, Suwon-si Gyeonggi-do (KR); Jeon, Hee Kyung, Suwon-si Gyeonggi-do (KR); Hong, Nho Kyung, Suwon-si Gyeonggi-do (KR); Youn, Su Jung, Suwon-si Gyeonggi-do (KR)
(74) Representative: Boakes, Jason Carrington

(57) **Abstract**

A mobile communication terminal and method are provided. The terminal displays an animation icon associated with active information, like for instance current time, on a wait screen. A determination is made as to whether a motion of the animation icon is associated with active information of the mobile communication terminal, and the animation icon according to the active information is moved when the motion of the animation icon is associated with active information. Since the animation icon displayed on the wait screen is associated with the active information, a user can easily check the active information of the mobile communication terminal through the animation icon. Also, the present invention increases visibility of active information of the mobile communication terminal and provides new user interfaces.

## Description

### BACKGROUND OF THE INVENTION

### 1. Field of the Invention:

The present invention relates a mobile communication terminal. More particularly the present invention relates to a mobile communication terminal apparatus and method for displaying an animation icon on a wait screen, which associates with active information.

### 2. Description of the Related Art:

As the technology of mobile communication terminals has developed, users of mobile communication terminals are provided with various convenience functions in addition to the calling function. As more and more services and additional functions related to the mobile communication terminals are provided, the display sizes and the number of displayable colors have been increased. On the other hand, as mobile communication terminal users require various functions, the mobile communication terminals must be developed such that the display screen can be more efficiently used to perform a displaying function through various methods. When the mobile communication terminals are developed to comply with the users' various demands, their convenience must be considered.

Although conventional mobile communication terminals can download music files and image files according to users' demands, their wait screens show only uniform images provided by manufacturers. For example, the wait screens can show only one of certain images, a user's name image, and a clock image, which is located at a preset position. And, although the wait screen can be set to show a variety of contents, such as a photograph, a moving image, an animation icon, and the like, it is restricted in the quantity of information that a user may provide. Furthermore, it is limited in providing a user's various demands for new user interfaces.

For example, when the conventional mobile communication terminal reproduces a multimedia file, such as an MP3 file, in a wait state, the wait screen displays a control bar indicative of control for the reproducing multimedia file on the wait screen. However, only the displayed control bar is shown on the wait screen. That is, the conventional mobile communication terminal has limitation to provide new user interfaces.

In addition, the conventional wait screen displays active information of a mobile communication terminal, through still icons, such as a battery icon indicative of remaining power, an antenna icon indicative of received signal strength, and a clock icon indicative of time. As such, since the conventional mobile communication terminal displays a uniform graphic through the wait screen, it deteriorates the visibility of the active information and makes the user bored with the screen. Furthermore, the conventional mobile communication terminal does not fully use the number of available colors or a large display for displaying active information.

### SUMMARY OF THE INVENTION

An aspect of the present invention is to address the above-mentioned problems and/or disadvantages and to provide at least the advantages described below. Accordingly, an aspect of the present invention is to provide a mobile communication terminal that can display an animation icon on a wait screen, which associates with active information and a method for providing the wait screen of the mobile communication terminal.

Another aspect of the present invention is to further provide a mobile communication terminal that can fully use the number of available colors and an enlarged screen, thereby increasing the visibility for active information and providing stimulating and new interfaces to a user, and a method for providing the wait screen of the mobile communication terminal.

In accordance with an aspect of the present invention, a method for providing a wait screen of a mobile communication terminal is provided. The method includes displaying a wait screen including an animation icon, determining whether motion of the animation icon is associated with active information of the mobile communication terminal on the wait screen, and changing the motion of the animation icon according to the active information when motion of the animation icon is associated with active information.

In an exemplary implementation, the displaying of the wait screen may include overlapping and displaying an active image having the active information with a background image, and overlapping and displaying the animation icon with the active image.

In an exemplary implementation, the active information may include at least one of received signal strength indicator information, battery remaining information, or multimedia file information.

In an exemplary implementation, the animation icon may include at least one or more floating icons moved freely on the wait screen. The floating icons may be moved regularly on the wait screen according to the active information. The wait screen may display a plurality of floating icons that have different colors and different sizes.

In an exemplary implementation, the animation icon may include a time icon indicative of current time. For example, the time icon may display hours and minutes through a still icon of a certain size and display seconds through a floating icon that is moved on the still icon, associating with the active information.

In accordance with another aspect of the present invention, a mobile communication terminal providing a wait screen is provided. The terminal includes a display unit for displaying the wait screen having an animation icon, and a screen preparing unit for changing motion of the animation icon according to active information of the mobile communication terminal and for displaying it on the display unit.

In accordance with another aspect of the present invention, a method for providing a wait screen of a mobile communication terminal is provided. The method includes displaying the wait screen where a time icon indicative of current time is overlapped with a background image, determining whether reproduction of a sound source is performed on the wait screen, and, when the reproduction of a sound source is performed, changing the time icon associating with frequency bands of the reproduced sound source and displaying it.

In an exemplary implementation, the time icon displays hours, minutes, and seconds, in which the hours and minutes are displayed through a still icon of a certain size, and the seconds are displayed through a floating icon that is moved above the still icon, associating with a frequency band of a sound source.

In an exemplary implementation, the floating icon displayed on the wait screen is located at a position corresponding to a pitch of a frequency band of a sound source.

In an exemplary implementation, the time icon is displayed on the wait screen in a certain size and increases/decreases in size according to a pitch of the frequency band.

In an exemplary implementation, the background image may include an image indicative of current time.

In accordance with an aspect of the present invention, a mobile communication terminal providing a wait screen is provided. The terminal includes a storage unit for storing a plurality of sound sources and a plurality of images for preparing the wait screen, a voice signal processing unit for outputting the sound sources extracted from the storage unit, a screen preparing unit for overlapping a time icon with a frequency band of a sound source reproduced on a background image to prepare the wait screen, in which the time icon is moved associating with the frequency band of as sound source, and for displaying the prepared wait screen on the display unit.

### BRIEF DESCRIPTION OF THE DRAWINGS

The above and other aspects, features and advantages of certain exemplary embodiments of the present invention will be more apparent from the following detailed description in conjunction with the accompanying drawings, in which:

FIG 1 is a block diagram illustrating a mobile communication terminal providing a wait screen, according to an exemplary embodiment of the present invention;

FIG. 2 is a view illustrating a hierarchy of a wait screen displayed on the display of the mobile communication terminal of FIG. 1;

FIG. 3 is a view illustrating an example of a wait screen of the mobile communication terminal of FIG. 1;

FIG 4 is a flow chart illustrating a method for providing a wait screen of a mobile communication terminal, according to an exemplary embodiment of the present invention;

FIG. 5 is a flow chart illustrating a method for providing a wait screen of a mobile communication terminal, according to an exemplary embodiment of the present invention;

FIG. 6 is a view illustrating a screen to describe an animation icon that is moved according to equalizer information of the sound source based on the method of FIG 5;

FIG 7 is a view illustrating an exemplary embodiment of a screen according to the method of FIG. 5; and

FIG. 8 is a view illustrating an exemplary embodiment of a screen according to the method of FIG. 5.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Mobile communication terminal

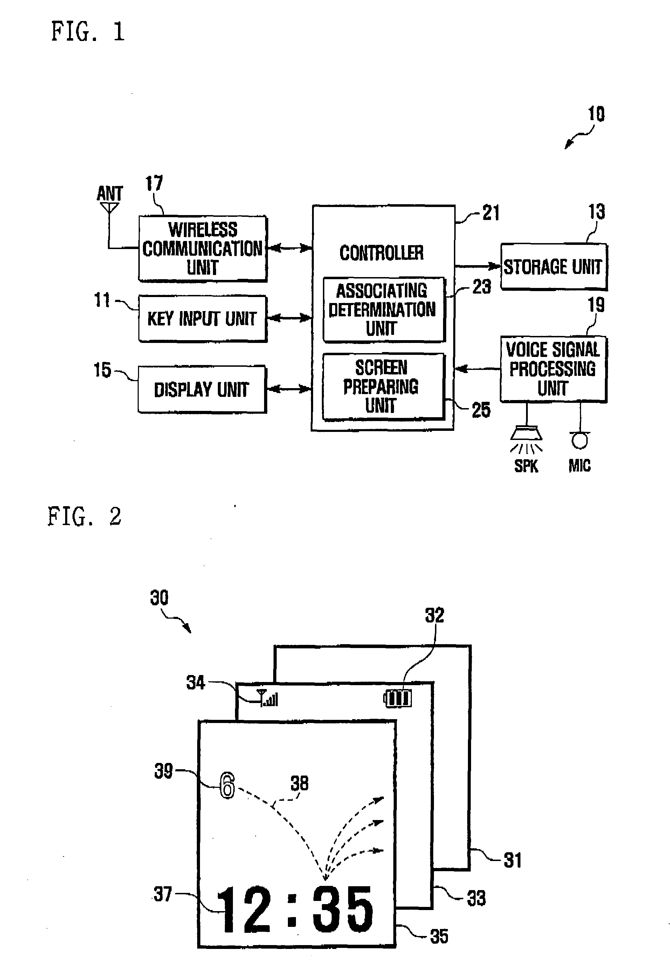

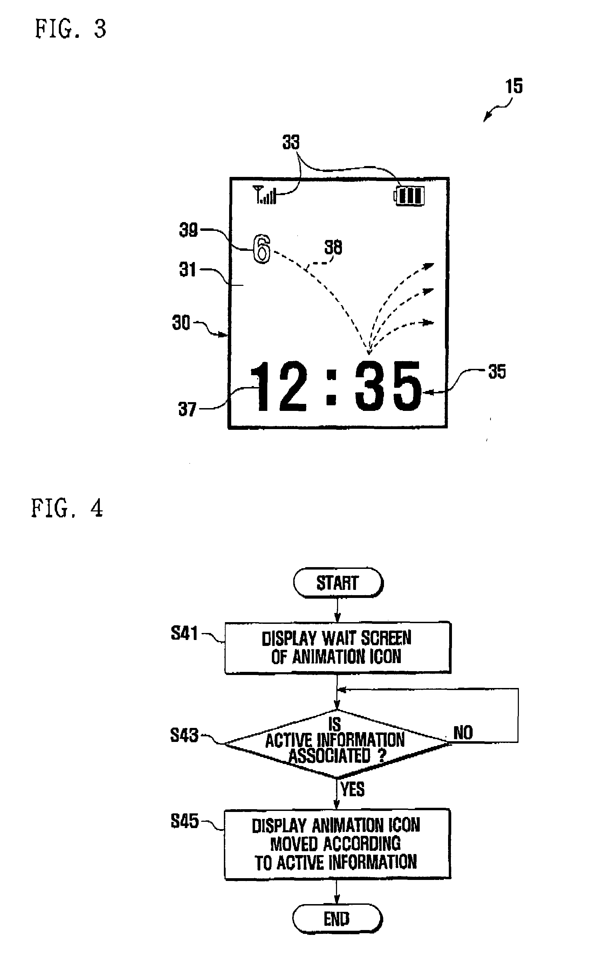

FIG 1 is a schematic block diagram illustrating a mobile communication terminal 10 for providing a wait screen, according to an exemplary embodiment of the present invention. FIG 2 is a view illustrating a hierarchy of a wait screen 30 displayed on the display unit 15 of the mobile communication terminal of FIG 1. FIG 3 is a view illustrating an example of a wait screen 30 of the mobile communication terminal of FIG. 1.

Referring to FIGs. 1 to 3, the mobile communication terminal 10 includes a controller 21, key input unit 11, storage unit 13, display unit 15, wireless communication unit 17 and voice signal processing unit 19.

The controller 21 controls the entire operation of the mobile communication terminal 10. Specifically, the controller 21 controls to prepare a wait screen 30, execute an animation icon 35 associated with active information and output the wait screen on the display unit 15.

The key input unit 11 has a plurality of keys to operate the mobile communication terminal 10, which create key data according to a user's key selection that is transmitted to the controller 21. For example, the user's commands created through the key input unit 11 may include preparation of a wait screen 30 and execution of an animation icon 35 associated with active information.

The storage unit 13 stores programs to control operations of the mobile communication terminal 10, and information created as the programs are executed. For example, the storage unit 13 stores a program for preparation of a wait screen 30, a program related to execution of an animation icon 35 associated with active information, and information created as the programs are executed. As well, the storage unit 13 stores sound sources and images to prepare the wait screen 30. Here, the sound sources may include information based on a frequency band corresponding thereto, i.e., equalizer information. The images include background images 31 according to various times of day, such as dawn, morning, afternoon, sunset, evening, etc., active images 33, and animation icons 35.

The display unit 15 displays information stored in the storage unit 13 as well as menus corresponding to a variety of functions executed in the mobile communication terminal 10. The display unit 15 displays icons or letters corresponding to active information of the mobile communication terminal 10 according to user's key selection. The display unit 15 displays a wait screen 30, and an animation icon 35 associated with information activated in the wait screen 30. The display unit 15 may be implemented by an LCD.

The wireless communication unit 17 performs modulation and frequency conversion for information outputted from the controller 21 and transmits radio signals through an antenna ANT, As well, the wireless communication unit 17 separates received signals from radio signals received through the antenna ANT and then performs frequency conversion and demodulation for the received signals to output it to the controller 21.

The voice signal processing unit 19 converts a voice input through a microphone MIC into a digital signal, and demodulates voice information received by the wireless communication unit 17 to output it to a speaker SPK, according to the control of the controller 21. As well, the voice signal processing unit 19 processes sound sources stored in the storage unit 13 to output it to the speaker SPK.

The controller 21 includes a screen preparing unit 25 and an associating determination unit 23. The screen preparing unit 25 prepares a wait screen 30 of an animation icon 35. The screen preparing unit 25 extracts background images 31, active images 33, and animation icons 35 from the storage unit 12, and then overlaps them together to prepare the wait screen 30. The associating determination unit 23 determines whether the animation icon 35 is associated with active information of the mobile communication terminal 10 in the wait screen 30. When the animation icon 35 is associated with active information, the screen preparing unit 25 moves the animation icon 35 according to the active information and then displays it on the display unit 15.

The wait screen 30 includes a hierarchy of multi-layers, as shown in FIGs. 2 and 3. That is, the wait screen 30 is formed in such a way that the background image 31, active image 33 and animation icon 35 are overlapped in an order.

The background image 31 refers to an image that corresponds to the current time, and may be configured in such a way that at least one or more images overlap. The background image 31 may be implemented by seasonal images.

The active image 33 overlaps with the background image 31 and displays active information. Similar to the background image 31, the active image 33 may also be configured in such a way that at least one or more images are overlapped. Of the active information, a battery icon 32 indicative of battery status may be displayed at the top right on the active image 31 and an antenna icon 34 indicative of received signal strength may be displayed at the top left on the active image 31,

The animation icon 35 is overlapped on the active image 33. The animation icon 35 includes at least one or more floating icon 39 moved freely in the wait screen 30. The floating icon 39 may be variously implemented as time, an animal, a plant, a balloon, a rider, a hot-air balloon, an air plane, a fire cracker and the like. When the floating icon 39 is not associated with active information, it is moved randomly or regularly. In contrast, when the floating icon 39 is associated with active information, it is moved according to the active information. Reference numeral 38 indicates exemplary trajectories of a floating icon 39 that is moved randomly.

For example, the animation icon 35 may be implemented by a time icon indicating the current time composed of hours, minutes, and seconds. The hours and minutes are implemented to be displayed through a still icon 37 of a certain size, and the seconds are implemented to be displayed through a floating icon 39 that is moved freely on the still icon 37. Here, the still icon 37 may be implemented to be displayed on the bottom of the wait screen 30.

### Method for providing wait screen

FIG 4 is a flow chart illustrating a method for providing a wait screen of a mobile communication terminal 10 according to an exemplary embodiment of the present invention.

Referring to FIGs. 1 to 4, the method for providing a wait screen includes displaying a wait screen 30 of an animation icon 35 in step S41, determining whether motion of the animation icon 35 is associated with active information of the mobile communication terminal 10 on the wait screen in step S43, and, based on the determination result, displaying the changing animation icon 35 in step S45.

In step S41, the displaying of the wait screen 30 includes overlapping an active image 33 having the active information with a background image 31 and overlapping the animation icon 35 with the active image 33 and displaying it on a display unit 15.

In step S43, an associating determination unit 25 determines whether a key, which associates motion of the animation icon 35 with active information in the wait screen 30, is input.

When the key is input in the determination result of S43, a screen preparing unit 25 moves the animation icon 35 according to the active information in step S45. In contrast, when the key has not been input, the screen preparing unit 25 keeps displaying the current motion of the animation icon 35.

The following is a method for providing the wait screen 30 in which a time icon as the animation icon 35 is used, and equalizer information 60 of an MP3 sound source, as a multimedia file, is associated with the animation icon 35, in which the equalizer information 60 is used as the active information, referring to FIG 1 and FIGs. 5 to 7.

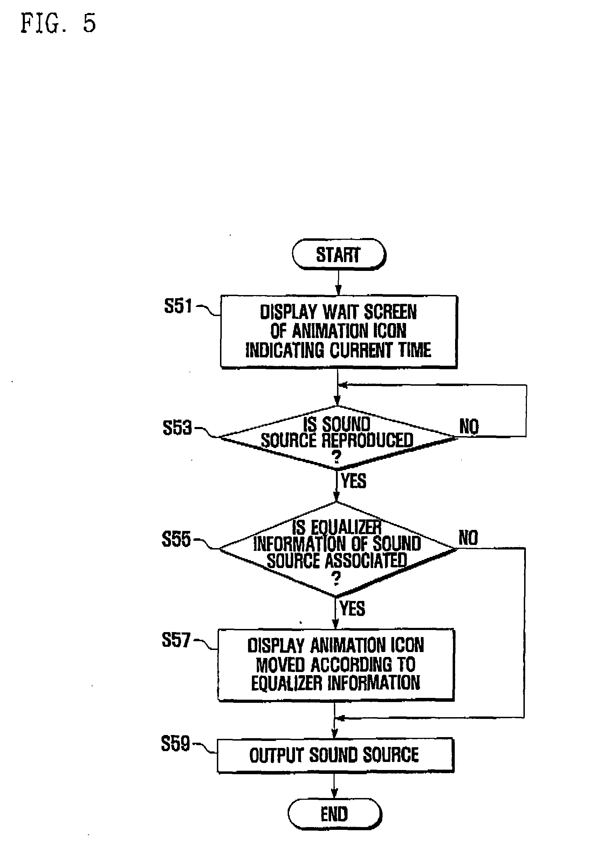

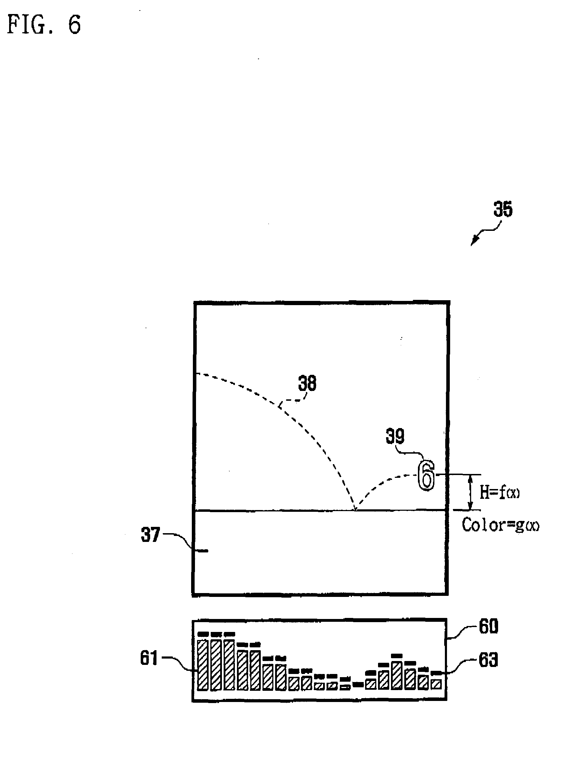

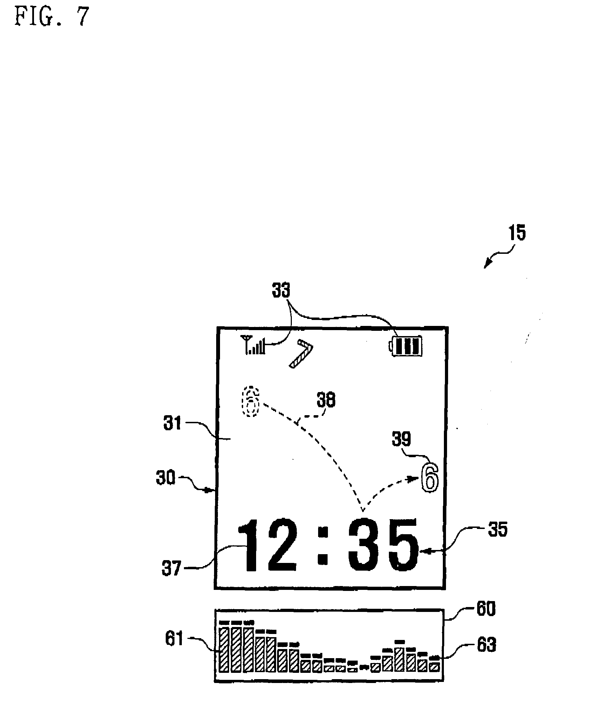

FIG. 5 is a flow chart illustrating a method for providing a wait screen of a mobile communication terminal, according to another exemplary embodiment of the present invention. FIG 6 is a view illustrating a screen to describe an animation icon 35 that is moved according to equalizer information 60 of the sound source based on the method of FIG. 5. FIG 7 is a view illustrating an exemplary embodiment of a screen of the method of FIG. 5.

Referring to FIG 5, the screen preparing unit 25 displays a wait screen 30 of an animation icon 35 on the display unit 15 in step S51. The screen preparing unit 25 displays a still image 37 of the animation icon 35 at the bottom of the wait screen 30 and displays a floating icon 39 at the top of the still icon 37, in which the floating icon 39 is moved freely. The screen preparing unit 25 displays the animation icon 35 to comply with the current time.

Next, the controller 21 determines whether a key for reproducing a sound source is input in step S53. The sound source, for example, an MP3 sound source, is stored in the storage unit 13. In an exemplary embodiment, the sound source is stored in the storage unit 13. In another exemplary embodiment, the sound source is streamed to the mobile communication terminal 10 through the wired/wireless communication networks.

When the key for reproducing a sound source is input in step S53, an associating determination unit 23 determines whether a key, which associates motion of the animation icon 35 with the equalizer information 69 of the sound source, is input in step S55. When the key is input in step S55, the screen preparing unit 25 moves the animation icon 35 according to the equalizer information 60 of the sound source and then displays it on the display unit 15 in step S57.

The screen preparing unit 25 displays the floating icon 39 of the animation icon 35 such that it can correspond to the equalizer information 60 of the reproduced sound source, i.e., the pitch 63 of the frequency band 61 of the reproduced sound source, on the wait screen 30. Meanwhile, the wait screen 30 can display a plurality of floating icons 39 simultaneously. In that case, the floating icons 39 can be implemented by different colors and different sizes. Specifically, according to a value x corresponding to the pitch 63 of the frequency band 62 of the sound source, the floating icon has a height (H=f(x)). Here, f(x) denotes a function value of a floating icon 39 corresponding to a value x. Also, the floating icon 39 has a color and size (Color=g(x)) that denotes a function value and is determined according to information (x) about the second. Also, g(x) can be acquired by using a variety of information (x), for example, received signal strength indicator information or battery remaining information.

Therefore, the floating icon 39 is associated with the frequency band 61 of the sound source and moved on the still icon 37. The floating icon 39 is displayed on the wait screen 30 so that its height H can correspond to the pitch 63 of the frequency band 61 of the sound source.

When the key has not been input in S55, the screen preparing unit 25 continues displaying the current motion of the animation icon 35,

After that, the voice signal, processing unit 19 processes the sound source to output it to the speaker SPK in step S59. Therefore, the user can listen to the sound outputted from the speaker SPK and see the animation icon 35 that is moved on the display unit 15 according to the equalizer information 60 of the sound source.

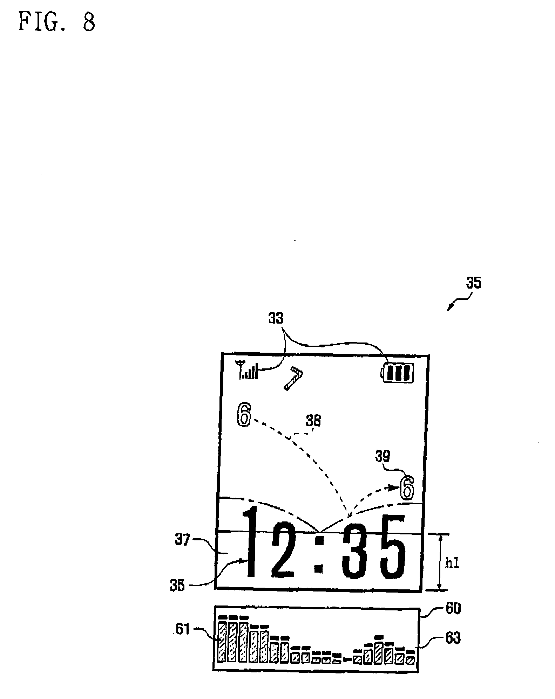

Although the described embodiment discloses an example in which the trajectory 38 of the floating icon 39 is moved as shown in FIG 7, it can be modified in such a way that the still icon 37 can be moved corresponding to the pitch 63 of the frequency band 61 of the sound source as shown in FIG. 8. In that case, the still icon 37 keeps the basic height h1 and the portion above the height h1 is changed corresponding to the pitch 63 of the frequency band 61 of the sound source.

While in the above description, the time icon associated with equalizer information of a sound source is displayed on the wait screen, the present invention is not limited by this embodiment. The wait screen can be implemented in such a way that a balloon as an animation icon rises from the bottom of the wait screen to the top and the balloon can be associated with a received signal strength indicator of an antenna, which is one piece of active information. That is, when the received signal strength indicator is high, a relatively large balloon is displayed on the wait screen, but when the received signal strength indicator is low, a relatively small balloon is displayed. Similarly, the battery current remaining amount can be indicated on the wait screen using the relative size of a balloon. As well, the received signal strength indicator of an antenna and the battery remaining amount can be indicated on the wait screen through different colored balloons although they have the same size.

In addition, the received signal strength indicator and the battery remaining amount can be displayed on the wait screen, simultaneously, by animation icons, That is, an antenna icon and a battery icon are displayed on the top left and the top right of the wait screen, respectively, and operate in such a way that the respective balloons corresponding thereto rise at the left and right sides of the wait screen.

As described in the foregoing, the present invention can associate animation icons with active information and then display it on the wait screen. Therefore, a user can easily check the active information of the mobile communication terminal through the animation icons.

In addition, the present invention can fully make use of the number of available colors and the enlarged screen of the mobile communication terminal through the animation icons, thereby increasing the visibility of active information of the mobile communication terminal and providing stimulating and new interfaces to a user.

Further, the present invention can display a background image according to the current time on the wait screen, thereby allowing a user to check the current time easily.

While the present invention has been particularly shown and described with reference to exemplary embodiments thereof, it will be understood by those of ordinary skill in the art that various changes in form and details may be made therein without departing from the spirit and scope of the present invention as defined by the following claims and their equivalents.

## Claims

1. A method for providing a wait screen of a mobile communication terminal, the method comprising:
displaying a wait screen including an animation icon;
determining whether motion of the animation icon is associated with active information of the mobile communication terminal on the wait screen; and
changing the motion of the animation icon according to the active information, when motion of the animation icon is associated with active information.

2. The method of claim 1, wherein the displaying of the wait screen comprises:
overlapping an active image having the active information with a background image and displaying it; and
overlapping the animation icon with the active image and displaying it.

3. The method of claim 2, wherein the active information comprises at least one of received signal strength indicator information, remaining power information and multimedia file information.

4. The method of claim 3, wherein the animation icon comprises one or more floating icons which move on the wait screen.

5. The method of claim 4, wherein the one or more floating icons are moved regularly on the wait screen according to the active information.

6. The method of claim 1, wherein the animation icon comprises a time icon indicative of current time.

7. The method of claim 6, wherein the time icon displays hours and minutes through a still icon of a certain size and displays seconds through a floating icon that is moved on the still icon associating with the active information.

8. The method of claim 7, wherein the wait screen displays a plurality of floating icons which have different colors and different sizes.

9. A mobile communication terminal providing a wait screen comprising:
a display unit for displaying a wait screen having an animation icon; and
a screen preparing unit for changing a motion of the animation icon according to active information of the mobile communication terminal and displaying the animation icon on the display unit.

10. The terminal of claim 9, wherein the wait screen comprises:
a background image;
an active image overlapped with the background image, for displaying the active information; and
the animation icon overlapped with the active image.

11. The terminal of claim 10, wherein the active information comprises at least one of received signal strength indicator information, remaining power information and multimedia file information.

12. The terminal of claim 11, wherein the animation icon comprises one or more floating icons which move on the wait screen.

13. The terminal of claim 12, wherein the one or more floating icons are moved regularly on the wait screen according to the active information.

14. The terminal of claim 9, wherein the animation icon comprises a time icon indicative of current time.

15. The terminal of claim 14, wherein the time icon comprises:
a still icon for displaying hours and minutes; and
a floating icon for displaying seconds, in which the floating icon is moved on the still icon associating with the active information.

16. The terminal of claim 15, wherein the wait screen displays a plurality of floating icons which have different colors and different sizes.

17. A method for providing a wait screen of a mobile communication terminal, the method comprising;
displaying a wait screen comprising a time icon indicative of current time is overlapped with a background image;
determining whether reproduction of a sound source is performed on the wait screen;
changing the time icon associating with frequency bands of the reproduced sound source when the reproduction of a sound source is performed; and
displaying the changed icon.

18. The method of claim 17, wherein the time icon displays hours, minutes, and seconds, in which the hours and minutes are displayed through a still icon, and the seconds are displayed through a floating icon that is moved above the still icon, associating with the frequency bands of a sound source.

19. The method of claim 18, wherein the floating icon displayed on the wait screen is located at a position corresponding to a pitch of the frequency band of a sound source.

20. The method of claim 17, wherein the time icon is displayed on the wait screen in a certain size and changes in size according to a pitch of the frequency band.

21. The method of claim 17, wherein the background image comprises an image indicative of current time.

22. A mobile communication terminal providing a wait screen comprising:
a storage unit for storing a plurality of sound sources and a plurality of images for preparing a wait screen;
a voice signal processing unit for outputting the sound sources extracted from the storage unit;
a screen preparing unit for overlapping a time icon with a frequency band of a sound source reproduced on a background image to prepare the wait screen, in which the time icon is moved associating with the frequency band of the sound source; and
a display unit for displaying the prepared wait screen.
